Europäisches Patentamt

European Patent Office

Office européen des brevets

(19)

(11) Numéro de publication : **0 038 256**
**B1**

(12) **FASCICULE DE BREVET EUROPÉEN**

(45) Date de publication du fascicule du brevet :
03.04.85

(51) Int. Cl.⁴ : **H 02 B   1/20**

(21) Numéro de dépôt : **81400568.2**

(22) Date de dépôt : **09.04.81**

(54) Commutateur à plusieurs couches de points de croisement.

(30) Priorité : **15.04.80 FR 8008935
18.12.80 FR 8027561**

(43) Date de publication de la demande :
**21.10.81 Bulletin 81/42**

(45) Mention de la délivrance du brevet :
**03.04.85 Bulletin 85/14**

(84) Etats contractants désignés :
**BE CH DE GB IT LI NL SE**

(56) Documents cités :
**EP-A- 0 025 729
FR-A- 1 457 726**

(73) Titulaire : **L'Etat Français représenté par le Secrétaire d'Etat aux Postes et Télécommunications et à la
Télédiffusion
(Centre National d'Etudes des Télécommunications)
38-40 rue du Général Leclerc
F-92131 Issy-les-Moulineaux (FR)**

(72) Inventeur : **Gentric, Alain
27, Lotissement Keranroux Ploubezre
F-22300 Lannion (FR)**
Inventeur : **Lahaussois, Michel
1, rue Anatole Le Bras
F-22560 Trebeurden (FR)**

(74) Mandataire : **Le Guen, Louis François
13, rue Emile Bara BP 91
F-35802 Dinard Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un commutateur à matrices à plusieurs couches de points de croisement selon le préambule de la revendication 1. Ces commutateurs sont utilisables notamment dans des répartiteurs téléphoniques ou autres, ou dans des dispositifs semblables. Elle concerne un tel commutateur à sélection par coordonnées.

Le commutateur décrit dans le brevet FR-A-2 468 990, dont la priorité a été revendiquée dans la demande de brevet européen EP-A-0 025 729 qui constitue, en ce qui concerne ladite priorité, un état de la technique pertinent au sens de l'Article 54(3) de la CBE, se compose de plusieurs premières nappes de fils parallèles orientés dans une première direction et de plusieurs secondes nappes de fils orientés dans une direction perpendiculaire aux premières nappes, les premières et secondes nappes de fils étant intercalées. Chaque nappe de fils est portée par une grille en matière isolante à mailles carrées. Chaque maille est traversée par un fil conducteur qui est parallèle à un de ses côtés. Les grilles des secondes nappes sont décalées angulairement d'un quart de tour, toutes dans le même sens, par rapport aux grilles des premières nappes. Un point de croisement est constitué par deux mailles adjacentes superposées et une surface conductrice d'une fiche dont l'axe est perpendiculaire au plan des nappes et qui est enfichée dans les mailles du point de croisement permet de relier électriquement le segment de fil de la maille supérieure au segment de fil de la maille inférieure. Chaque surface conductrice est formée par un secteur de bague cylindrique. Chaque fiche enfichée dans un empilage de points de croisement comporte autant de surfaces conductrices que de points de croisement superposés. Les fiches comportent des têtes en forme de croissants dont les cornes coopèrent avec les dents souples de barres de sélection déformables par des dents de barres de travail. Les barres de sélection et de travail sont croisées. Chaque barre de sélection peut être poussée dans un sens, ce qui détermine, avec une barre de travail au travail, la rotation d'une tête de fiche d'un quart de tour dans un sens, et peut être tirée dans l'autre sens, ce qui détermine, avec une barre de travail adjacente au travail, la rotation de la même tête d'un quart de tour dans l'autre sens. La rotation dans un sens ou dans l'autre fait que les secteurs conducteurs des bagues de la fiche établit ou rompt les connexions des points de croisement empilés.

Ainsi, dans le commutateur décrit dans le brevet FR-A-2 468 990, dans chaque couple de grilles nécessaires pour réaliser un point de croisement, une fiche est coincée par les deux côtés des mailles superposées isolantes, par le fil d'une maille qui constitue un troisième côté, et par le fil perpendiculaire de l'autre maille qui constitue le quatrième côté. La fiche est donc maintenue en place par deux côtés rigides et par deux côtés souples. Les espaces existant entre les conducteurs et les côtés des mailles adjacents sont perdus. Comme, par ailleurs, les largeurs des côtés des mailles sont relativement plus grandes que ceux des fils conducteurs, il en résulte que, dans une grille, plus de la moitié de la surface utile est perdue.

Un objet de la présente invention consiste à prévoir un commutateur à plusieurs couches de points de croisement analogue à celui décrit dans le brevet FR-A-2 468 990, mais dont l'espace effectivement utilisé soit pratiquement doublé par rapport à celui-là.

Un autre objet de la présente invention consiste à prévoir un commutateur dans lequel les points de contact des fiches se trouvent en position d'équilibre quel que soit leur état.

Un autre objet de l'invention consiste à prévoir un commutateur permettant de réaliser des matrices pliées.

Un autre objet de la présente invention consiste à prévoir une structure de tête de fiche et un organe de commande permettant de grouper toutes les têtes de fiches en haut de l'empilage, ce qui réduit le volume relatif occupé par le dispositif de commande et augmente donc les possibilités de raccordement au niveau des baies.

Un autre objet de l'invention consiste à prévoir un organe de commande de tête de fiche permettant d'obtenir l'accessibilité sur une seule face d'un empilage.

Le commutateur est caractérisé en ce que chaque première nappe est constituée par une pluralité de fils de rangée de rangs impairs et une pluralité de fils de rangée de rangs pairs, chaque seconde nappe est constituée par une pluralité de fils de colonne de rangs impairs et une pluralité de fils de colonne de rangs pairs, les fils de rangée et de colonne de rangs impairs formant une première matrice et les fils de rangée et de colonne de rangs pairs formant une seconde matrice, des premiers points de croisement étant formés par les fils de rangée et de colonne de la première matrice, des surfaces conductrices de premières fiches qui sont coincées entre lesdits fils de rangée et de colonne de la première matrice et les fils de rangée et de colonne de même rang de la seconde matrice, des seconds points de croisement étant constitués par les fils de rangée et de colonne de la seconde matrice et des surfaces conductrices de secondes fiches qui sont coincées entre lesdits fils de rangée et de colonne de la seconde matrice et les fils de rangée et de colonne de rangs supérieurs de la première matrice, les premières et secondes fiches ayant un diamètre supérieur au côté des mailles des nappes de fils, chaque surface conductrice de fiche comportant une première et une seconde surface de contact reliées galvaniquement entre elles, les positions angulaires des première et seconde surfaces de contact étant décalées de 90° et leurs distances axiales étant égales à celles de deux nappes adjacentes, le commutateur comprenant encore des moyens de commande capables de faire tourner les têtes des fiches par quart de tour dans un sens ou dans l'autre.

Suivant une autre caractéristique, les surfaces conductrices ont une forme en L dont la base du L correspond à un arc de 90° et la hauteur du L à la distance entre les nappes d'une direction et les nappes de l'autre direction.

Suivant une autre caractéristique, les premières fiches ont leurs têtes en haut de l'empilage et les secondes fiches ont leurs têtes en bas de l'empilage.

Suivant une autre caractéristique, chaque nappe de fils est posée, sans blocage, dans des gorges prévues dans les côtés opposés d'un cadre en matière plastique.

Suivant une autre caractéristique, chaque cadre porte des premières fentes sur deux côtés opposés qui soutiennent les fils et des secondes fentes sous les deux autres côtés opposés, l'empilage étant constitué par des cadres alternativement décalés de 90°, les secondes fentes d'un cadre supérieur se positionnant sur les fils placés dans les premières fentes du cadre adjacent inférieur.

Suivant une autre caractéristique de l'invention, il est prévu un commutateur dans lequel chaque tête de fiche, supposée la tête en haut, se compose d'une partie basse en forme de came comportant deux arcs de cercles de diamètres différents réunis par des segments et surmontée par une partie haute en forme de manivelle présentant à son extrémité une échancrure verticale, les moyens de commande étant constitués par un couvercle recouvrant les têtes de fiche et comportant des rainures de guidage sous lesquelles sont prévues des butées se positionnant au niveau des segments des cames, et, au moins, une tige pouvant coulisser dans les rainures et portant un doigt souple vertical, ladite échancrure de manivelle étant une surface d'embrayage pour ledit doigt souple, lesdites butées limitant les angles de rotation des cames.

Suivant une autre caractéristique, les têtes de toutes les fiches sont disposées d'un même côté de l'empilage de points de croisement.

Suivant une autre caractéristique, la longueur des manivelles est supérieure au côté des mailles carrées formées par les nappes de fils, le diamètre du grand arc de cercle des cames étant légèrement inférieur audit côté des mailles carrées.

Suivant une autre caractéristique, lesdits moyens de commande comprennent encore un profilé positionnable dans une rainure du couvercle en face de la fiche à faire tourner, le profilé contenant la tige de commande coulissable, l'extrémité active de chaque tige de commande étant souple et portant, au point de suspension du doigt souple vertical, un ergot qui est engagé dans une gorge creusée dans une paroi verticale du profilé, la gorge ayant une courbure concave vers le haut, la tige étant reliée à des moyens de déplacement en translation faisant décrire la gorge à l'ergot, dans un sens ou dans l'autre, à chaque commutation, les points hauts de la gorge étant à un niveau tel que, quand ledit ergot s'y trouve, l'extrémité inférieure du doigt est au-dessus des manivelles tandis que le point bas de la gorge est à un niveau tel que, quand ledit ergot s'y trouve, ladite extrémité inférieure embraye l'échancrure d'une manivelle.

Suivant une autre caractéristique, une rangée de butées sur deux est supprimée et l'organe de commutation comprend deux tiges de commande parallèles.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

la Figure 1 est une vue schématique de dessus d'un commutateur suivant l'invention,

la Figure 2 est une vue schématique d'un point de croisement du commutateur de la Fig. 1, à plus grande échelle.

les Figures 3a et 3d sont des vues schématiques destinées à illustrer le fonctionnement du commutateur de la Fig. 1,

la Figure 4 est une vue schématique en perspective d'un groupe de fiches utilisées dans le commutateur de la Fig. 1,

la Figure 5 est une vue en perspective éclatée d'un ensemble de commutation dans lequel on utilise des commutateurs suivant la Fig. 1,

la Figure 6 est une vue en perspective de l'ensemble de la Fig. 5, les divers éléments étant emboîtés les uns dans les autres,

les Figures 7a à 7b sont des vues schématiques illustrant une variante de fonctionnement,

les Figures 8a à 8c sont respectivement des vues en plan en élévation et de bout de la partie active d'un organe de commande de commutation et de têtes de fiches, suivant l'invention,

les Figures 9a à 9c sont des vues schématiques montrant les changements d'état d'une tête de fiche de commutation, et

la Figure 10 est une vue agrandie de la tête de fiche G(2,2) et de deux des trois butées situées dans son voisinage immédiat.

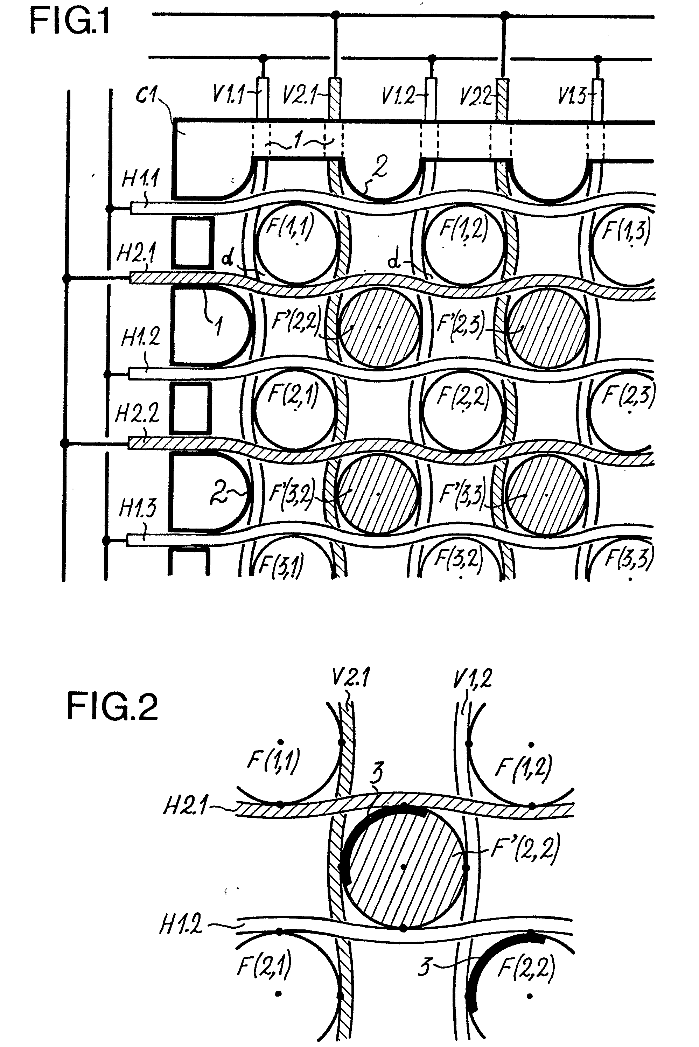

L'élément de commutateur, montré partiellement à la Fig. 1, comprend une première matrice de fils conducteurs formées d'une nappe de fils de rangées H1.1, H1.2, etc., et d'une nappe de fils de colonnes V1.1, V1.2, etc., et une seconde matrice de fils conducteurs formées d'une nappe de fils de rangées H2.1, H2.2, etc., et d'une nappe de fils de colonne V2.1, V2.2, etc. Les nappes H1 et H2 de fils de rangée sont dans un même plan horizontal, les fils d'une nappe étant alternés avec les fils de l'autre nappe. Les nappes V1 et V2 de fils de colonnes sont également dans un même plan horizontal, mais qui est différent de celui des nappes H1 et H2, les fils des nappes V1 et V2 étant également alternés. En pratique, les nappes H1 et H2 sont d'un côté d'un cadre isolant C1 tandis que les nappes V1 et V2 sont de l'autre côté du cadre. Les bords du cadre C1 sont pourvues, d'un côté, d'encoches 1 parallèles aux nappes H1 et H2, dans lesquelles sont insérées les extrémités des fils de ces nappes, et, de l'autre côté, d'encoches 1 parallèles aux nappes V1 et V2 pour maintenir les extrémités des fils de ces nappes. A noter que les fils ne sont pas bloqués dans les encoches 1. Entre les encoches 1, les cadres présentent des bossages 2 tournés vers l'intérieur.

Les première et seconde matrices de fils conducteurs forment entre elles une matrice de mailles carrées ou carrés D(H1.p,H2.q ; V1.r,V2.s), où H1.p, H2.q, V1.r et V2.s sont les références des fils définissant le carré. En pratique, p et q ne peuvent différer que d'une unité et il en est de même pour r et s.

Les carrés D pour lesquels p et q sont égaux ainsi que r et s sont pourvus de fiches F(p,r). Les carrés D pour lesquels q est inférieur à p et s inférieur à r sont pourvus de fiches F'(p,r). Ainsi, on a montré, à la Fig. 1, la fiche F(1.1) dans le carré défini par les fils H1.1, H2.1, V1.1 et V2.1, la fiche F(1,2) dans le carré défini par les fils H1.1, H2.1, V1.2 et V2.2, la fiche F(2,1) dans le carré défini par les fils H1.2, H2.2, V1.1 et V2.1, la fiche F(2,2) dans le carré défini par les fils H1.2, H2.2, V1.2 et V2.2, etc. De même, on a montré la fiche F'(2,2) dans le carré défini par les fils H1.2, H2.1, V1.2 et V2.1, la fiche F'(3,2) dans le carré défini par les fils H1.3, H2.2, V1.2 et V2.1, etc.

A titre d'exemple, comme le montre la Fig. 2, la fiche F'(2,2), qui comporte comme les autres fiches une plage conductrice 3, a un diamètre légèrement plus grand que le côté du carré dans lequel elle est logé, c'est-à-dire un diamètre plus grand que la moitié du pas d'une nappe de fils. Donc, elle déforme le carré en barillet, comme le font également les quatre fiches F(1,1), F(1,2), F(2,1) et F(2,2) adjacentes. Comme les fiches F et les fiches F' sont disposées en quinconce chaque fil est fléchi alternativement dans un sens et dans l'autre. A noter que les bossages 2, qui forment des demi-cercles vers l'intérieur, remplissent le rôle des fiches pour les fils adjacents aux bords du cadre.

Il faut noter que l'on obtient ainsi une répartition uniforme des pressions de contact entre les surfaces des fiches et les fils conducteurs. Quand la fiche est tournée dans son carré pour établir ou rompre des continuités électriques, la répartition des pressions n'est pas modifiée.

Plusieurs couches de nappes de fils de rangées et de colonnes peuvent être superposées. Il en résulte que le cylindre de chaque fiche est entrelacé par quatre, huit, douze, seize ou plus de fils ou poutres fléchies, selon le nombre de couches. Cette structure permet d'absorber les écarts dimensionnels éventuels pouvant affecter les diamètres des fiches, sur les quatre flèches ou plus, sans pour autant perturber le fonctionnement des fiches adjacentes.

Par ailleurs, il apparaît que les éléments du commutateur s'autoéquilibrent aux seuls contacts des fils conducteurs et des fiches.

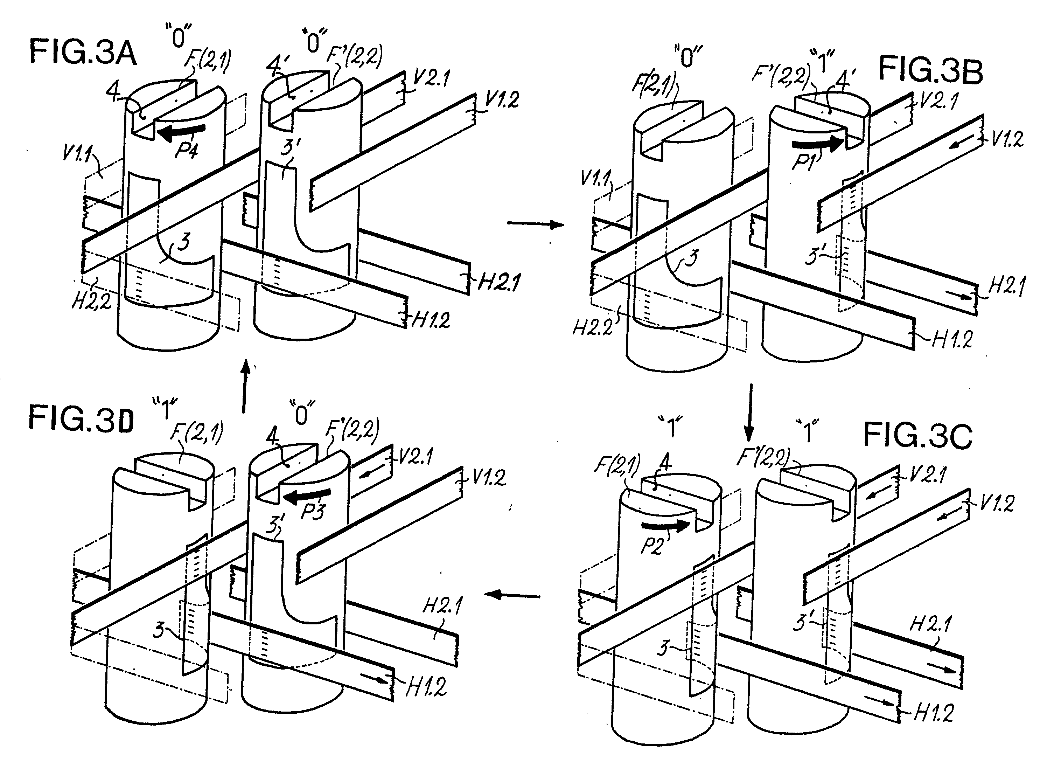

La Fig. 3a représente les deux fiches adjacentes F(2,1) et F'(2,2), ainsi que les conducteurs H2.1, H1.2, H2.2, V1.1, V2.1 et V1.2 qui les entrelacent. La fiche F(2,1) comporte une plage conductrice 3 en forme de L, la partie supérieure du L étant au niveau des conducteurs de colonnes tandis que le bas du L est au niveau des conducteurs de rangées. La hauteur d'une plage est donc sensiblement égale à la différence de niveau entre le bord supérieur des conducteurs de colonnes et le bord inférieur des conducteurs de rangées. La longueur du pied du L est de l'ordre du quart de la circonférence de la fiche. Dans la position indiquée à la Fig. 3a, la fiche F(2,1) est supposée en position de repos ou état « 0 ». En effet, la plage 2 est en contact avec le conducteur H2.2, mais est isolée des conducteurs V1.1 et V2.1. Aucun courant ne peut passer par l'intermédiaire de F(2.1).

La fiche F'(2,2) comporte également une plage conductrice 3', qui est identique à la plage 3 et située au même niveau. Dans la position indiquée à la fig. 3a, la fiche F'(2,2) est également en position de repos ou à l'état « 0 ». La plage 3' est en contact avec le conducteur H1.2, mais est isolée des conducteurs V2.1 et V2.2. Aucun courant ne peut passer par l'intermédiaire de la F'(2,2).

Aux Figs. 3a à 3d, on a représenté des fentes 4 et 4' au sommet des fiches, ces fentes ayant simplement pour but de schématiser un moyen de faire tourner les fiches à l'aide d'un tourne-vis. Bien entendu, dans une réalisation pratique, les fiches comportent des têtes de forme plus élaborées permettant de les faire tourner au moyen d'organes de commutation.

A la Fig. 3b, on suppose que la fiche F'(2,2) a été tournée dans le sens inverse des aiguilles d'une montre, d'un quart de tour, comme le montre la flèche P1. La position de la fiche F(2,1) n'a pas été modifiée. La plage 3' de la fiche F'(2,2) a maintenant sa partie supérieure en contact avec le conducteur H2.1, ce qui établit un circuit électrique de V1.2 à H2.1, par 3'. Le point de croisement est fermé. La fiche F'(2,2) est au travail ou à l'état « 1 » tandis que la fiche F(2,1) est toujours à l'état « 0 ».

A la Fig. 3c, on suppose que la fiche F(2,1) a été tournée dans le sens inverse des aiguilles d'une montre, d'un quart de tour, comme le montre la flèche P2. La position de la fiche F'(2,2) est restée celle de la Fig. 3b. La plage 3 de la fiche F(2,1) a maintenant sa partie supérieure en contact avec le conducteur V2.1 et sa partie inférieure en contact avec le conducteur H1.2, ce qui établit un circuit électrique de V2.1 à H1.2, par 3. Le point de croisement est fermé. La fiche F(2,1) est au travail ou à l'état « 1 », comme la fiche F'(2,2).

A la Fig. 3d, on suppose que la fiche F'(2,2) a été tournée dans le sens des aiguilles d'une montre, d'un quart de tour, comme l'indique la flèche P3. La position de la fiche F(2,1) n'a pas été modifiée par rapport à celle de la Fig. 3c. Donc, la fiche F'(2,2) a repris la position qu'elle avait à la Fig. 3a, c'est-à-dire est revenue à l'état « 0 », la fiche F(2,1) restant à l'état « 1 ».

Pour faire passer la fiche F(2,1) à l'état « 0 », il suffit, comme l'indique la flèche P4, Fig. 3a, de la faire tourner d'un quart de tour dans le sens des aiguilles d'une montre.

Les commutations qui viennent d'être décrites en relation avec les Fig. 3a à 3d indiquent qu'il n'y a pas interaction entre les fiches de repères F et celles de repères F'.

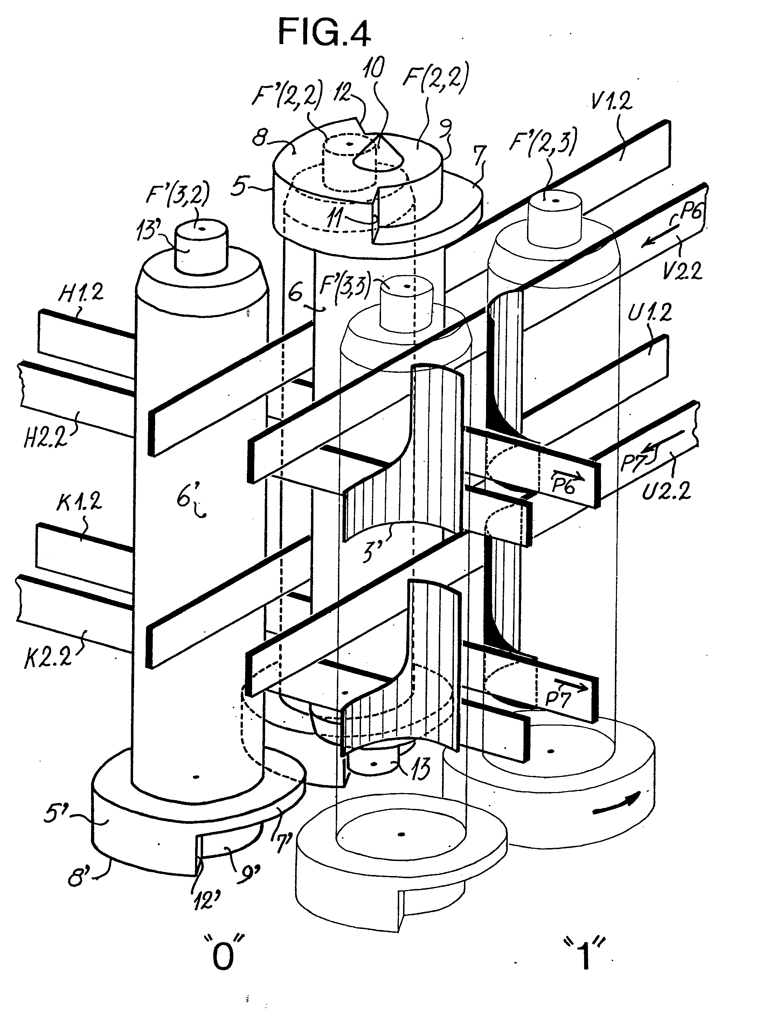

La vue en perspective de la Fig. 4 montre, à titre d'exemple, les quatre fiches F'(2,2), F'(2,3), F'(3,2) et F'(3,3) dont les têtes de commandes 5' sont en bas, et la fiche F(2,2) dont la tête de commandes 5 est en haut. On a également représenté quelques conducteurs de deux couches avec lesquels ces fiches peuvent fermer des contacts, c'est-à-dire, pour la couche supérieure, les conducteurs H1.2, H2.2, V1.2 et V2.2, et, pour la couche inférieure, les conducteurs K1.2, K2.2, U1.2 et U2.2, ces derniers se déduisant des premiers par simple translation.

La fiche F(2,2) comprend un corps cylindrique 6 pourvu d'une tête 5, l'ensemble de 5 et 6 étant en matière plastique isolante. Le corps 6 porte des lamelles de contact 3, en nombre égal au nombre de couches du commutateur. Ces lamelles 3 ont une forme en L, comme on l'a déjà décrit en relation avec les figs. 3a à 3d.

La tête 5 comporte une partie basse cylindrique 7 et une partie haute en forme de secteur circulaire 8 présentant un renflement cylindrique 9 en son centre. Le centre du renflement cylindrique 9 est surmonté d'un pion conique 10. Bien entendu, le corps 6 de la fiche, le cylindre de 7, celui de 9 et le cône 10 sont de révolution autour du même axe. La partie sectorielle 8 est limitée par les plans 11 et 12 qui font entre eux un angle au centre légèrement inférieur à 180°.

A l'opposé de la tête 5, la tige 6 se termine par un tenon cylindrique coaxial 13 de diamètre nettement inférieur à celui du corps.

Toutes les autres fiches de références F sont identiques à la fiche F(2,2), qui vient d'être décrite. Les fiches de référence F' ont leur corps 6' et leurs lamelles de contact 3' qui se déduisent par translation du corps 6 et des lamelles 3. Les têtes 5' se déduisent des têtes 5 par symétrie par rapport au plan médian perpendiculaire aux axes des fiches.

A la Fig. 4, les fiches F(2,2), F'(2,2), F'(3,2) et F'(3,3) sont supposées à l'état « 0 » tandis que la fiche F'(2,3) est supposée à l'état « 1 ». Donc, la fiche F'(2,3) offre un passage de courant des conducteurs V1.3 et U1.3 respectivement aux conducteurs H1.2 et K1.2, comme indiqués par les flèches P6 et P7.

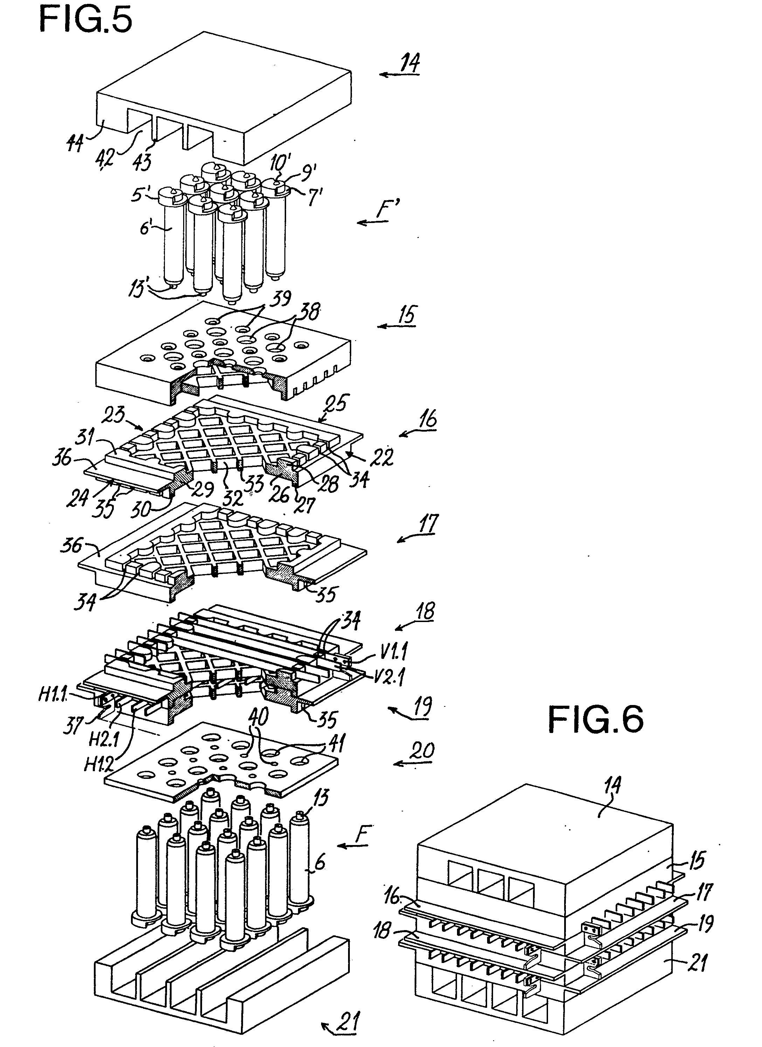

La Fig. 5 représente schématiquement, en vue éclatée, les éléments d'un ensemble ou empilage de commutateurs suivant l'invention, associés à des éléments de commande. Cet ensemble comprend un couvercle de module de commande 14, un groupe de fiches F', un panneau supérieur 15, une première grille support 16, une seconde grille support 17, une troisième grille support 18 emboîtée dans une quatrième grille support 19, un panneau inférieur 20, un groupe de fiches F et un couvercle de module de commande 21.

La grille support 16 est formée d'un cadre rectangulaire comportant deux côtés étroits parallèles 22 et 23, et de deux côtés larges parallèles 24 et 25, perpendiculaires aux premiers. La section droite des côtés 22 et 23 est en forme d'équerre dont une branche horizontale 26 est relativement longue et épaisse par rapport à la branche verticale 27. De plus, la branche 26 porte une partie 28 en saillie vers le haut. La section droite des côtés 24 et 25 est aussi en forme d'équerre dont la branche horizontale 29 est identique à la branche 26, et la branche verticale 30 est identique à la branche 27. La branche 29 porte aussi une partie 31 en saillie vers le haut.

Les branches 26 et 29 forment un cadre pratiquement carré dont les bords internes sont réunis par une série de barres équidistantes 32 à 45° et une série de barres équidistantes 33 à 135°. Les barres 32 et 33 ont une hauteur égale à l'épaisseur des branches 26 et 29 ; elles sont perpendiculaires entre elles ; elles forment la grille proprement dite dans laquelle sont enfilées les fiches F' et F. La rotation de 45° de la grille par rapport aux alignements des fiches F' et F assure la disposition en quinconce montrée à la Fig. 1. Les carrés de la grille des barres 32 et 33 ont un côté de longueur un peu supérieur au diamètre des corps des fiches de manière que celles-ci puissent y être logées avec un jeu important.

Les branches 27 et 30 forment sous les branches 26 et 29 un rebord dont la hauteur est égale à celle des parties en saillies 28 et 31. Les parties en saillie 28 et 31 forment un rebord tourné vers le haut tandis que le rebord formé par 27 et 30 est tourné vers le bas, la disposition de ces rebords étant tel que celui de 27 et 30 s'emboîte autour de celui de 28 et 31. De plus, le rebord supérieur formé par les parties en saillie des côtés 22 et 23 présente des gorges 34 dont le pas est celui des conducteurs du commutateur. Le rebord supérieur formé par les parties en saillies des côtés 24 et 25 ne comporte pas de gorges. Le rebord inférieur formé par les branches 30 des côtés 24 et 25 comporte également des gorges 35 dont le pas est celui des conducteurs du commutateur. Le rebord supérieur formé par les branches 27 des côtés 22 et 23 ne comporte pas de gorges.

Enfin, les bords 24 et 25 comportent des rebords horizontaux 36 dont la face supérieure est alignée avec celle des branches 29 et dont l'épaisseur est sensiblement plus faible que celle de 29. Ces rebords 35 permettent de séparer les couches des extrémités externes des conducteurs.

La grille 17 est identique à la grille 16, mais est décalée de 90° par rapport à celle-ci. Ce décalage angulaire se traduit par des alignements entre les gorges 35 de la grille 17 et les gorges 34 de la grille 16, et ainsi de suite dans l'empilage.

On a représenté la grille 18, qui est identique à la grille 16 et orientée comme elle, avec quelques conducteurs verticaux V1.1, V2.1, V1.2 et V2.2 placés dans les gorges 34 correspondantes. Le plan médian des conducteurs V1.1 et V2.1 passent par le centre des carrés correspondants formés par les barres 32 et 33. La distance entre V1.1 et V2.1 est, comme on l'a mentionné en relation avec la Fig. 1, légèrement inférieure au diamètre du corps des fiches.

La représentation des grilles 18 et 19 montrent également comment celles-ci s'emboîtent l'une sur l'autre, la grille 19 étant tournée de 90° par rapport à la grille 18. Elle montre également les extrémités des conducteurs horizontaux H1.1, H2.1, H1.2 et H2.2 encastrés dans les gorges 35 de la grille 18 et les gorges 34 de la grille 19. A titre d'exemple, une borne 37 est fixée sur l'extrémité du conducteur H1.1, cette borne 37 étant prévue pour être raccordée au fil correspondant d'un câble.

Le panneau 15 est une pièce qui a pratiquement la forme de la partie de la grille 16 qui se trouve au-dessous du niveau des bords supérieurs des barres 32 et 33, moins les rebords 36, mais surmontée d'une plaque carrée percée de séries de trous 38 et 39.

Les trous 38 sont prévus pour y enfiler les corps des fiches F' et les trous 39 sont prévus pour recevoir les tenons cylindriques 13 des fiches F.

Le panneau 20 est une simple plaque carrée prévue pour s'inscrire dans le périmètre délimité par le rebord 27-30 de la grille 19, immédiatement supérieure. Il comporte des séries de trous 40 et 41. Les trous 40 sont prévus pour recevoir les tenons cylindriques des fiches F' et les trous 41 pour y enfiler les fiches F.

Le couvercle 14 comporte autant de rainures 42 dont le pas est celui des fiches F' et qui sont orientées dans le même sens que les rangées de fiches F', ou encore dans le sens des conducteurs horizontaux. La hauteur des rainures 42 est égale à la hauteur d'une tête de fiche, plus la hauteur d'un organe de commutation. Le bas des cloisons 43 définissant les rainures, ainsi que celui des parois extérieures 44, viennent en contact avec la face supérieure du panneau 15, en passant entre les fiches.

Le couvercle 21 est semblable au couvercle 14, avec des rainures orientées dans le même sens. Toutefois, dans l'exemple décrit, il comporte une rainure supplémentaire car les fiches F sont plus nombreuses que les fiches F'.

La Fig. 6 montre l'ensemble des éléments de la Fig. 5 emboîté les uns dans les autres, les fiches F et F' étant mises en place à l'intérieur. On pourra noter la compacité de l'ensemble qui comporte pratiquement le double de points de croisement par rapport aux commutateurs décrits dans le brevet FR-A-2 468 990.

Bien entendu, à la Fig. 5, on a montré un commutateur qui ne comporte que deux couches de points de croisement uniquement pour simplifier le dessin, étant entendu qu'un commutateur comprendrait en pratique de x couches de points de croisement, x variant de 2 à 7 pour les applications aux télécommunications.

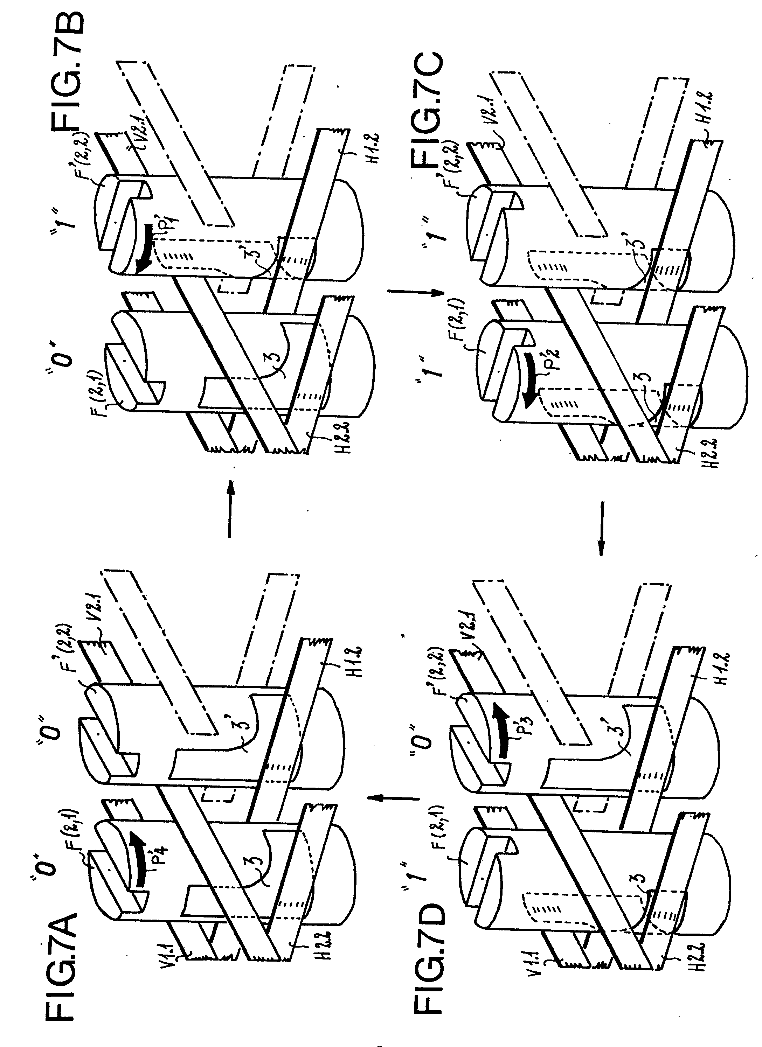

Les Figs. 7A à 7D représentent une variante de commande des fiches par rapport à la commande décrite en relation avec les Figs. 3A à 3D. A la Fig. 7A, les fiches F(2,1) et F'(2,2) sont toutes deux à l'état « 0 ». A la Fig. 7B, la fiche F'(2,2) a été tournée d'un quart de tour dans le sens de la flèche P'2, qui est inverse de celui de la flèche P2 de la Fig. 3B. On constate que la fiche F'(2,2) établit un circuit électrique entre V2.1 et H1.2, par la plage 3'. La fiche F'(2,2) est passée à l'état « 1 ». A la Fig. 3C, on tourne la fiche F(2,1) dans le sens de la flèche P'3, en sens inverse de P3, Fig. 3C, ce qui fait passer la fiche F(2,1) à l'état « 1 », etc. Ainsi, on obtient des commutations différentes en tournant les fiches dans un sens ou dans l'autre, ce qui offre une souplesse d'utilisation remarquable.

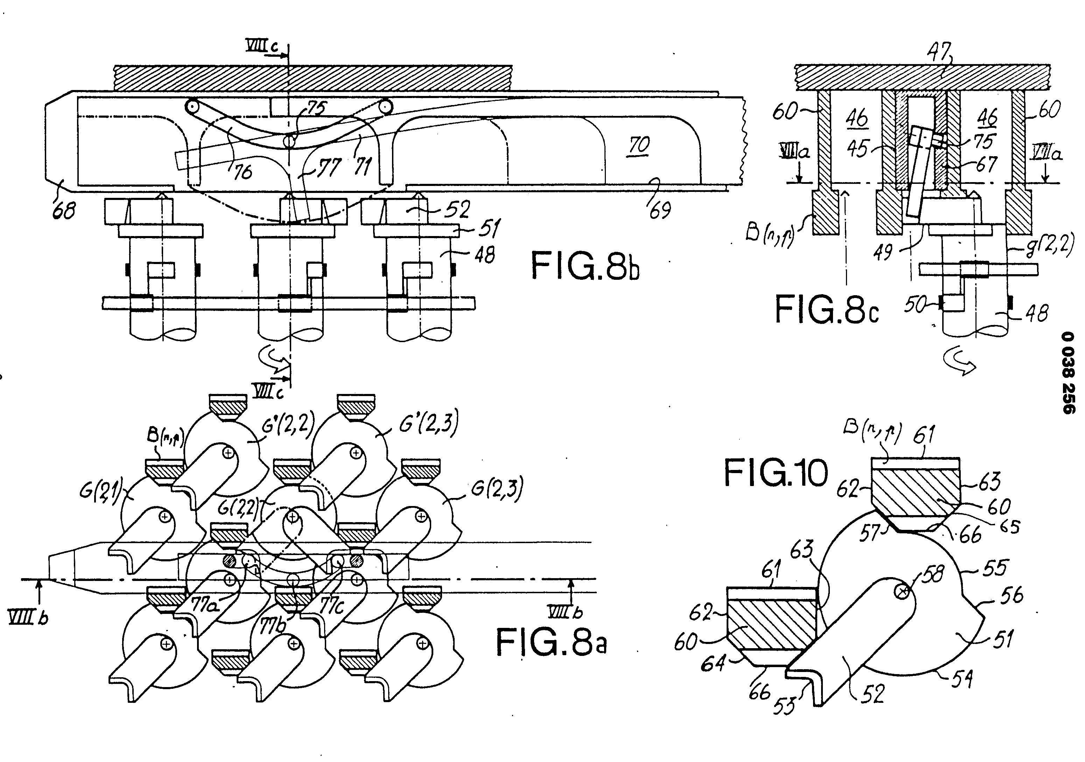

Les Figs. 8a à 8c montrent un organe de commutation 45 introduit dans une rainure 46 d'un couvercle 47 pour commuter par rotation une des fiches de l'empilage associé, soit par exemple la fiche G(2,2). La Fig. 8a est une vue en coupe suivant la ligne VIIIa-VIIIa de la Fig. 8c ; la Fig. 8b est une vue en coupe suivant la ligne VIIIb-VIIIb de la Fig. 8a ; et la Fig. 8c est une vue en coupe verticale suivant la ligne VIIIc-VIIIc de la Fig. 8b.

La fiche G(2,2) comprend un corps cylindrique 48, analogue au corps 6, pourvu d'une tête 49, différente de la tête 5, l'ensemble de 48 et 49 étant en matière plastique isolante. Le corps 48 porte des lamelles de contact 50, en nombre égal au nombre de couches du commutateur. Ces lamelles 50 ont sensiblement une forme en S et fonctionnent, comme on le verra dans la suite, de la manière déjà décrite en relation avec les Fig. 3A à 3D.

La tête 49 de la fiche G(2,2), Fig. 10, comporte une partie basse 51 en forme de came et une partie haute 52 en forme de manivelle présentant à son extrémité une échancrure verticale 53. La came 51 est limitée par un arc de cercle 54 d'angle au centre voisin de 240° et de grand diamètre, et un arc de cercle 55 d'angle au centre voisin de 120° et de plus petit diamètre, les arcs 54 et 55 étant réunis par des segments droits alignés 56 et 57. La manivelle 52 est solidaire de la came 51 et est surmontée par un pion conique 58. Les arcs 54, 55, le corps 48 et le pion 58 ont le même axe de révolution.

Les rainures 46 du couvercle 47 sont définies par des cloisons verticales ajourées ou continues 60, solidaires de la plaque supérieure du couvercle et dont les bords libres inférieurs portent chacun une série de butées B(n,p), où n et p correspondent aux indices de la fiche à laquelle la butée est associée. L'ensemble des butées B(n,p) a donc une configuration en quinconce comme celle de l'ensemble des fiches. La section horizontale d'une butée B(n,p) a une forme polygonale à six côtés dont un grand côté 61 parallèle à la direction des cloisons 60, deux côtés égaux 62 et 63, adjacents et perpendiculaires à 61, deux côtés obliques 64 et 65, respectivement adjacents à 62 et 63, et un petit côté 66 réunissant les extrémités de 64 et 65, et parallèle à 60. La distance entre les côtés 61 et 66 est supérieure à l'épaisseur de la cloison 60 et la différence de longueur est répartie de chaque côté de celle-ci. Les angles des côtés 64 et 65 sont tels que, quand la tête 49 est tournée dans un sens, le segment 56 vient s'appliquer en butée sur le côté 64 et que, dans la tête 49 est tournée dans l'autre sens, le segment vient s'appliquer en butée sur le côté 65. De plus la section de la butée B(n,p) comporte un axe de symétrie perpendiculaire à 60 et passant par l'axe de la fiche G(n,p).

L'organe de commutation 45 se compose d'un profilé en U67 dont le U est tourné vers le bas et dont la largeur est égale à celle d'une rainure 46. Le bout 68 du profilé est biseauté pour faciliter l'introduction de l'organe dans une rainure. Dans le profilé 67, se loge une coulisse 69 dont le corps 70 occupe l'espace libre à l'intérieur du U et qui se termine par une tige souple 71 de section nettement plus réduite et qui occupe, à l'état de repos, une partie du haut du volume défini par le U. Comme le montrent les Figs. 9a à 9c, la tige 71 a une section sensiblement carrée ; elle présente, en allant vers le bout, vue de dessus, un premier coude 72 vers la droite, puis une partie droite 73 et, enfin un second coude 74 symétrique du premier. Sur la partie droite 73, vers l'extérieur, est fixé un ergot 75 qui est engagé dans une gorge 76 de la paroi latérale correspondante du profilé 67. Sous la partie droite 73, est fixé un doigt 77 relativement long et souple. La gorge 76 a la forme d'un arc de cercle dont la concavité est tournée vers le haut.

La longueur du doigt 77 et le niveau des points hauts de la gorge 76 sont tels que l'on peut, quand l'ergot 75 est en un des points hauts de 76, mouvoir l'organe 45, dans une rainure 46, sans modifier les positions des têtes de fiches qui se trouvent sous l'extrémité du doigt 77. Le niveau du bas de l'arc de la gorge 76 est tel que, quand on déplace la coulisse 69 par rapport au profilé 67, l'extrémité du doigt 77 descend assez bas pour s'engager dans l'échancrure verticale 53 d'une manivelle 52.

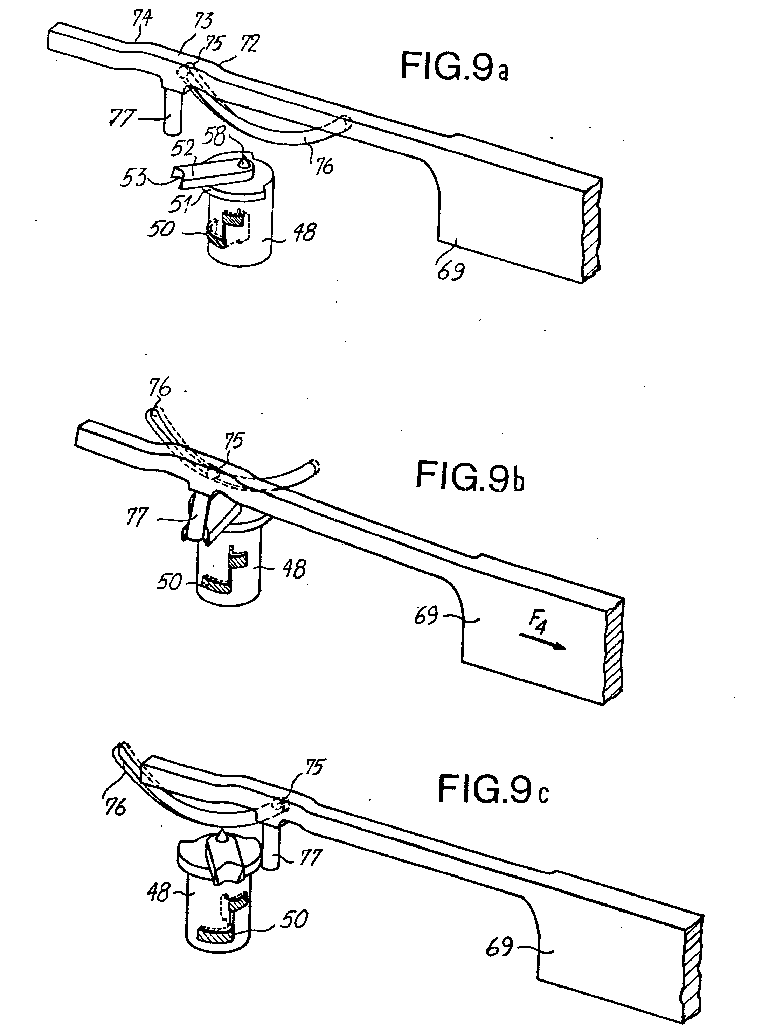

La Fig. 9a montre schématiquement la coulisse 69 au-delà de la tête de fiche G(2,2). La Fig. 9b montre la position intermédiaire de la coulisse 69 lors de la commutation, dans le sens de la flèche F4, de la tête. Le doigt 77 est descendu, a accroché l'échancrure 53 et a donc fait tourner la tête de 45°. Dans cette position, la tige 71 subit une torsion qui est visible à la Fig. 8c, qui représente cet état. La Fig. 9c montre la position finale de la commutation, où l'ergot 75 est monté à l'autre bout de la gorge 76. Le doigt 77 est de nouveau entièrement au-dessus des têtes ce qui permet le retrait de l'organe de commutation 45.

Pour réaliser la commutation dans le sens inverse de la flèche F4, on prendrait, comme position initiale, celle de la Fig. 5c, et, comme position finale, celle de la Fig. 9a, la position intermédiaire étant toujours celle de la Fig. 9b.

La Fig. 8a montre comment les mouvements des manivelles et des cames des têtes de fiches sont limitées par les butées B(n,p), chaque rotation permise étant de 90° dans un sens ou dans l'autre, ce qui correspond au fonctionnement des Fig. 3a à 3d. On notera qu'au cours de la rotation de G(2,2), sa manivelle 52 passe au-dessus des parties 51 des têtes voisines G'(3,2) et G'(3,3). En pratique le niveau du plan inférieur de la manivelle 52 peut être légèrement au-dessus du niveau du plan supérieur de la partie 51. Ainsi au cours de la rotation, il n'y a pas de contact entre les éléments des têtes voisines. La manivelle 52 a pour objet d'allonger le bras de levier sur lequel agit le doigt 77, donc de réduire l'effort à fournir par celui-ci.

La Fig. 8b montre la coulisse 69 en traits mixtes dans la position de la Fig. 9a, en trait fin dans la position de la Fig. 9b et en trait gras dans la position de la Fig. 9c, les références numériques des éléments de la coulisse n'étant indiquées que pour le dessin en trait fin. La vue en plan de la Fig. 8b montre notamment les différentes positions 77a, 77b et 77c du doigt 77 à différents stades de la commutation.

On notera également, à la Fig. 8a, qu'en position de repos, les têtes de fiches ont deux portées, l'une par un bord de came 51, l'autre par un bord de manivelle 52, sur deux butées B(n,p). Dans une variante de réalisation, on supprime une rangée de butées B(n,p) sur deux, si bien qu'entre deux rangées de butées, on a alors deux rangées décalées de têtes de fiches. Au repos, pour une rangée de têtes de fiches, la portée se trouve entre un bord de manivelle et une butée et, pour l'autre rangée, entre un bord de came et une butée. On peut alors utiliser un organe de commutation d'une largeur sensiblement double de celle de l'organe 45 et qui contient deux coulisses respectivement allouées à l'une et à l'autre rangée de tête de fiche.

Les Figs. 9a à 9c montrent également un exemple de réalisation d'un contrat 50 qui, au lieu d'avoir la forme en L déjà décrite, a une forme en S. La partie haute du S peut venir en contact avec le conducteur de la nappe qui se trouve un niveau plus bas et qui est perpendiculaire à la première nappe. La partie intermédiaire entre les zones de contact proprement dites du S est enchâssée radialement dans le corps de la fiche.

**Revendications**

1. Commutateur à plusieurs couches de points de croisement se composant de plusieurs premières nappes de fils parallèles orientés dans une première direction et de plusieurs secondes nappes de fils orientés dans une direction perpendiculaire aux premières nappes, les premières et secondes nappes étant empilées en les intercalant pour former un empilage, chaque nappe de fils étant portée par un cadre en matière isolante, un point de croisement étant constitué par deux fils situés dans deux nappes voisines et une surface conductrice d'une fiche, la hauteur de la surface conductrice étant suffisante pour relier électriquement un segment du fil de la nappe supérieure à un segment du fil perpendiculaire de la nappe inférieure, caractérisé en ce que chaque première nappe est constituée par une pluralité de fils de rangée de rangs impairs (H1.1, H1.2, H1.3) et une pluralité de fils de rangée de rangs pairs (H2.1, H2.2), chaque seconde nappe est constituée par une pluralité de fils de colonne de rangs impairs (V1.1, V1.2, V1.3) et une pluralité de fils de colonne de rangs pairs (V2.1, V2.2), les fils de rangée et de colonne de rangs impairs formant une première matrice et les fils de rangée et de colonne de rangs pairs formant une seconde matrice, des premiers points de croisement étant formés par les fils de rangée et de colonne de la première matrice, des surfaces conductrices de premières fiches (F) qui sont coincées entre lesdits fils de rangée et de colonne de la première matrice et les fils de rangée et de colonne de même rang de la seconde matrice, des seconds points de croisement étant constitués par les fils de rangée et de colonne de la seconde matrice et des surfaces conductrices de secondes fiches (F') qui sont coincées entre lesdits fils de rangée et de colonne de la seconde matrice et les fils de rangée et de colonne de rangs supérieurs de la première matrice, les premières et secondes fiches (F et F') ayant un diamètre supérieur au côté des mailles des nappes de fils, chaque surface conductrice de fiche comportant une première et une seconde surface de contact reliées galvaniquement entre elles, les positions angulaires des première et seconde surfaces de contact étant décalées de 90° et leurs distances axiales étant égales à celles de deux nappes adjacentes, le commutateur comprenant encore des moyens de commande capables de faire tourner les têtes de fiches par quart de tour dans un sens ou dans l'autre.

2. Commutateur suivant la revendication 1, caractérisé en ce que les surfaces conductrices (L et L') ont une forme en L dont la base du L correspond à un arc de 90° et la hauteur du L à la distance entre les nappes d'une direction et les nappes de l'autre direction.

3. Commutateur suivant la revendication 1 ou 2, caractérisé en ce que les premières fiches ont leurs têtes (5) en haut de l'empilage et les secondes fiches (5') leurs têtes en bas de l'empilage.

4. Commutateur suivant l'une des revendications 1 à 3, caractérisé en ce que chaque nappe de fils est posée, sans blocage, dans des gorges (1) prévues dans les côtés opposés d'un cadre (C1) en matière plastique.

5. Commutateur suivant l'une des revendications 1 à 4, caractérisé en ce que chaque cadre porte des premières fentes (34) sur deux côtés opposés qui soutiennent les fils et des secondes fentes (35) sous les deux autres côtés opposés, l'empilage étant constitué par des cadres alternativement décalés de 90°, les secondes fentes d'un cadre supérieur se positionnant sur les fils placés dans les premières fentes du cadre adjacent inférieur.

6. Commutateur suivant l'une des revendications 1 à 5, caractérisé en ce que les bords des cadres présentent alternativement entre deux fils, soit une partie droite ou en creux, soit une partie en saillie (2) en forme de demi-cercle, dont le diamètre est pratiquement égal à celui des fiches.

7. Commutateur suivant la revendication 1, caractérisé en ce que chaque tête de fiche (G, G'), supposée la tête en haut, se compose d'une partie basse (51) en forme de came comportant deux arcs (54, 55) de cercles de diamètres différents réunis par des segments (56, 57) et surmontée par une partie haute (52) en forme de manivelle présentant à son extrémité une échancrure verticale (53), lesdits moyens de commande étant constitués par un couvercle recouvrant les têtes de fiche et comportant des rainures de guidage sous lesquelles sont prévues des butées (B(n,p)) se positionnant au niveau des segments (56, 57) des cames, et, au moins, une tige (71) pouvant coulisser dans les rainures et portant un doigt souple vertical (77), ladite échancrure (53) de manivelle étant une surface d'embrayage pour ledit doigt souple (77), lesdites butées (B(n,p)) limitant les angles de rotation des cames.

8. Commutateur suivant la revendication 7, caractérisé en ce que les têtes de toutes les fiches sont disposées d'un même côté de l'empilage de points de croisement.

9. Commutateur suivant la revendication 7 ou 8, caractérisé en ce que la longueur des manivelles (52) est supérieure à la longueur d'un côté des mailles carrées formées par les nappes de fils (H, V), le grand diamètre du grand arc de cercle des cames (51) étant légèrement inférieur audit côté des mailles carrées.

10. Commutateur suivant l'une des revendications 7 à 9, caractérisé en ce que lesdits moyens de commande comprennent encore un profilé positionnable dans une rainure du couvercle en face de la tête de fiche à faire tourner, le profilé contenant la tige de commande coulissable, l'extrémité active de chaque tige de commande (71) étant souple et portant, au point de suspension du doigt souple vertical (77), un ergot (75) qui est engagé dans une gorge (76) creusée dans une paroi verticale du profilé, la gorge (76) ayant une courbure concave vers le haut, la tige (71) étant reliée à des moyens de déplacement en translation faisant décrire la gorge (76) à l'ergot (75), dans un sens ou dans l'autre, à chaque commutation, les points hauts de la gorge (76) étant à un niveau tel que, quand ledit ergot s'y trouve, l'extrémité inférieure du doigt (77) est au-dessus des manivelles (52) tandis que le point bas de la gorge (76) est à un niveau tel que, quand ledit ergot s'y trouve, ladite extrémité inférieure du doigt (77) embraye l'échancrure (53) d'une manivelle (52).

11. Commutateur suivant l'une des revendications 7 à 10, caractérisé en ce qu'une rangée de butées (B(n,p)) sur deux est supprimée et les moyens de commande (45) comprennent deux tiges de commande coulissables et parallèles.

12. Commutateur suivant l'une des revendications 7 à 11, caractérisé en ce que les surfaces conductrices des contacts (50) des fiches ont une forme en S, une surface conductrice étant constituée par la partie supérieure du S et l'autre surface conductrice par la partie inférieure du S, la partie intermédiaire du S étant enchâssée dans le corps de la fiche.

## Claims

1. A switch with several crosspoints layers, comprised of a plurality of first layers of parallel wires oriented in a first direction and a plurality of second layers of parallel wires oriented in a direction perpendicular to the first layers, the first and second layers being piled up one upon the other in an intercalated manner to form a pile-up, each layer of wires being supported by a frame made of insulating material, a crosspoint being constituted by two wires located in two neighboring layers and a conductor surface of a plug, the height of the conductor surface being sufficient to electrically connect a segment of the wire of the upper layer to a segment of the perpendicular wire of the lower layer, characterized in that each first layer is constituted by a plurality of row wires of uneven rank (H1.1, H1.2, H1.3) and a plurality of row wires of even rank (H2.1, H2.2), each second layer being constituted by a plurality of column wires of uneven ranks (V1.1, V1.2, V1.3) and a plurality of column wires of even ranks (V2.1, V2.2), the row wires and the column wires of uneven ranks forming a first matrix and the row wires and the column wires of even ranks forming a second matrix, first crosspoints being formed by row and column wires in the first matrix, conductor surfaces of first plugs (F) which are wedged between said row and column wires of the first matrix, and row and column wires of similar rank in the second matrix, second crosspoints being constituted by row and column wires in the second matrix and conductor surfaces of second plugs (F') which are wedged between said row and column wires of the second matrix, and row and column wires of upper rank in the first matrix, the first and second plugs (F, F') having a larger diameter than the side of the meshes of the wire layers, each plug conductor surface comprising a first and a second contact surfaces galvanically connected together, the angular positions of the first and second contact surfaces being shifted by 90° and their axial distances being equal to those of two adjacent layers, the switch having also control means capable to rotate the plug heads by quarter of a rotation in one direction or the other.

2. A switch according to claim 1, characterized in that the conductor surfaces (L and L') have a generally L shape, the base of which corresponds to a 90° arc and the height of which corresponds to the distance between the layers of one direction and the layers of the other direction.

3. A switch according to claim 1 or 2, characterized in that the first plugs have their heads (5) at the top of the pile-up and the second plugs (5') have their heads at the bottom of the pile-up.

4. A switch according to one of claims 1-3, characterized in that each wire layer is placed, without any blocking, into grooves (1) provided for in the opposite sides of a frame (C1) made of plastic material.

5. A switch according to one of claims 1-4, characterized in that each frame has first slots (34) on two opposite sides which support the wires and second slots (35) under the other two opposite sides, the pile-up being constituted by frames alternately shifted by 90°, the second slots of an upper frame being placed on the wires placed in the first slots of the lower adjacent frame.

6. A switch according to one of claims 1-5, characterized in that the edges of the frames alternately present, between two wires, either a straight or a hollowed-out part, or a half-circle shaped projecting part (2), the diameter of which is substantially equal to that of the plugs.

7. A switch according to claim 1, characterized in that each plug head (G, G'), said head being assumed located at the top of the plug, is comprised of a lower cam-shaped part (51) with two circular arcs (54, 55) of different diameters, joined by segments (56, 57) and over which there is a high crank-shaped part (52) having a vertical notch (53) at its end, said control means being constituted by a cover covering the plug heads and having guide grooves under which provided are lug piedes (B(n,p)) located at the level of the cam segments (56, 57), and, at least, a rod (71) slidable in the guide grooves and supporting a vertical flexible finger (77), said crank notch (53) being a gear surface for said flexible finger (77), said lug pieces (B(n,p)) limiting the angles of rotation for the cams.

8. A switch according to claim 7, characterized in that the head of every plug is arranged on one side of the crosspoint pile-up.

9. A switch according to claim 7 or 8, characterized in that the length of the cranks (52) is greater than the length of a side of the square meshes formed by the wire layers (H, V), the larger diameter of the larger circular arc of the cams (51) being slightly smaller than said of square meshes.

10. A switch according to one of claims 7-9, characterized in that the said governing means also have a profile that can be positionned in a groove of the lid in front of the plug head to be rotated, the profile containing the slidable control rod, the active end of each control rod (71) being flexible and supporting, at the suspension point of the vertical flexible finger (77), a stud (75) which is engaged in a groove (76) dug in a vertical wall of the profile, the groove (76) having an upward concave curvature, the rod (71) being connected to translation moving means causing the stud (75) to move along the groove (76) in one direction or the other, at every switching, the higher points of the groove (76) being at such a level that, when said stud is at said higher points, the lower end of the finger (77) is hanging above the cranks (52) while the lower point of the groove (76) is at such a level such that, when said stud is at said lower point, said lower end of the finger (77) engages the notch (53) of the crank (52).

11. A switch according to one of claims 7-10, characterized in that a row of lug pieces (B(n, p)) out of two is deleted and the control means (45) have two slidable and parallel control rods.

12. A switch according to one of claims 7-11, characterized in that the conductor surfaces of the contacts (50) of the plugs are S-shaped, one conductor surface being constituted by the upper part of the S and the other conductor surface by the lower part of the S, the intermediary part of the S being inserted into the body of the plug.

**Ansprüche**

1. Schalter mit mehreren Lagen von Kreuzungspunkten, enthaltend mehrere erste Lagen von in einer ersten Richtung orientierten parallelen Drähten und mehrere zweite Lagen von parallel in einer Richtung senkrecht zu den ersten Lagen orientierten Drähten, wobei die ersten und zweiten Lagen ineinandergeschachtelt zu einem Stapel übereinandergestapelt sind und jede Lage von Drähten von einem Rahmen aus Isoliermaterial getragen wird, wobei ferner ein Kreuzungspunkt durch zwei Drähte in benachbarten Lagen und eine leitende Fläche eines Steckers gebildet wird, und wobei die Höhe der leitenden Fläche ausreichend ist, um elektrisch ein Segment des Drahtes der oberen Lage mit einem Segment des senkrecht dazu verlaufenden Drahtes der unteren Lage zu verbinden, dadurch gekennzeichnet, daß jede erste Lage durch zahlreiche Drahtreihen (H1.1, H1.2, H1.3) mit ungeradem Rang und zahlreiche Drahtreihen (H2.1, H2.2) mit geradem Rang gebildet wird, daß jede zweite Lage aus zahlreichen Drahtkolonnen (V1.1, V1.2, V1.3) mit ungeradem Rang und zahlreichen Drahtkolonnen (V2.1, V2.2) mit geradem Rang gebildet wird, daß die Drahtreihen und die Drahtkolonnen mit ungeradem Rang eine erste Matrix und die Drahtreihen und die Drahtkolonnen mit geradem Rang eine zweite Matrix bilden, daß erste Kreuzungspunkte durch Reihen- und Kolonnendrähte in der ersten Matrix und leitende Flächen von ersten Steckern (F), die zwischen den genannten Reihen- und Kolonnendrähten der ersten Matrix sowie den Reihen- und Kolonnendrähten gleichen Ranges der zweiten Matrix eingeklemmt sind, gebildet werden, daß zweite Kreuzungspunkte durch Reihen- und Kolonnendrähte der zweiten Matrix und leitende Flächen von zweiten Steckern (F'), die zwischen den genannten Reihen- und Kolonnendrähten der zweiten Matrix sowie den Reihen- und Kolonnendrähten höheren Ranges in der ersten Matrix eingeklemmt sind, gebildet werden, daß die ersten und zweiten Stecker (F und F') einen größeren Durchmesser aufweisen als die Seitenlänge der Maschen der Drahtlagen, daß jede leitende Steckerfläche eine erste und eine zweite Kontaktfläche enthält, die galvanisch miteinander verbunden sind, daß die Winkelpositionen der ersten und zweiten Kontaktflächen um 90° gegeneinander versetzt sind und ihr axialer Abstand gleich demjenigen zweier benachbarter Lagen ist, daß der Schalter ferner Steuermittel aufweist, durch die die Stecker um eine Vierteldrehung in der einen oder der anderen Richtung drehbar sind.

2. Schalter nach Anspruch 1, dadurch gekennzeichnet, daß die leitenden Flächen (L und L') L-förmig ausgebildet sind, deren Basis einem 90°-Bogen entspricht, und deren Höhe dem Abstand zwischen den Lagen der einen Richtung und den Lagen der anderen Richtung entspricht.

3. Schalter nach Anspruch 1 oder 2, dadurch gekennzeichnet, daß die Köpfe der ersten Stecker (5) sich oben am Stapel und die Köpfe der zweiten Stecker (5') sich unten am Stapel befinden.

4. Schalter nach einem der Ansprüche 1 bis 3, dadurch gekennzeichnet, daß jede Drahtlage ohne Blockierung in Rillen (1) positioniert ist, die in gegenüberliegenden Seiten eines Kunststofframens (C1) vorgesehen sind.

5. Schalter nach einem der Ansprüche 1 bis 4, dadurch gekennzeichnet, daß jeder Rahmen erste Schlitze (34) an zwei gegenüberliegenden Seiten aufweist, die die Drähte tragen, sowie zweite Schlitze (35) unter den beiden anderen gegenüberliegenden Seiten, wobei der Stapel durch abwechselnd um 90° versetzte Rahmen gebildet wird, und wobei die zweiten Schlitze eines oberen Rahmens auf den in den ersten Schlitzen des benachbarten unteren Rahmens befindlichen Drähten zu liegen kommen.

6. Schalter nach einem der Ansprüche 1 bis 5, dadurch gekennzeichnet, daß die Ränder der Rahmen abwechselnd zwischen zwei Drähten entweder einen geraden oder ausgesparten Teil oder einen halbkreisförmig vorspringenden Teil (2) darstellen, dessen Durchmesser im wesentlichen gleich demjenigen der Stecker ist.

7. Schalter nach Anspruch 1, dadurch gekennzeichnet, daß jeder Steckerkopf (G, G') unter der Annahme, daß der Kopf sich oben befindet, einen unteren Teil (51) in Form einer Kurve mit zwei kreisförmigen Bögen (54, 55) mit unterschiedlichem Durchmesser aufweist, die durch Segmente (56, 57) verbunden sind, und über denen sich ein oberer Teil (52) in Form einer Kurbel befindet, die an ihrem Ende eine vertikale, halbmondförmige Aussparung (53) besitzt, daß die genannten Steuermittel durch eine Abdeckung gebildet werden, die die Steuerköpfe abdeckt und Führungsrillen aufweist, unter denen sich Nasen (B(n, p)) befinden, die auf dem Niveau der Kurvensegmente (56, 57) angeordnet sind, und daß wenigstens eine Stange (71) vorgesehen ist, die in den Führungsrillen gleiten kann und einen vertikalen flexiblen Finger (77) trägt, daß die genannte Aussparung (53) der Kurbel eine Kupplungsfläche für den genannten flexiblen Finger (77) bildet, und daß die genannten Nasen (B(n, p)) die Drehwinkel der Kurven begrenzen.

8. Schalter nach Anspruch 7, dadurch gekennzeichnet, daß die Köpfe aller Stecker an einer Seite des Kreuzungspunkt-Stapels angeordnet sind.

9. Schalter nach Anspruch 7 oder 8, dadurch gekennzeichnet, daß die Länge der Kurbeln (52) größer ist als die Seitenlänge der von den Drahtlagen (H, V) gebildeten quadratischen Maschen, und daß der große Durchmesser des großen Kreisbogens der Kurven (51) etwas kleiner als die Seitenlänge der quadratischen Maschen ist.

10. Schalter nach einem der Ansprüche 7 bis 9, dadurch gekennzeichnet, daß die genannten Steuermittel ferner ein Profil aufweisen, das in einer Rille der Abdeckung gegenüber dem zu drehenden Steckerkopf positionierbar ist, daß das Profil die gleitbare Steuerstange enthält, daß das aktive Ende jeder Steuerstange (71) flexibel ist und am Aufhängepunkt des vertikalen flexiblen Fingers (77) einen Vorsprung aufweist, der in Eingriff mit der Rille (76) ist, die in eine vertikale Wand des Profils eingeschnitten ist, daß die Rille eine nach oben konkave Krümmung aufweist, daß die Stange (71) mit translatorisch bewegbaren Mitteln verbunden ist, durch die der Vorsprung (75) in der Rille (76) bei jedem Schalten in der einen oder der anderen Richtung entlangbewegbar ist, daß die oberen Punkte der Rille (76) auf einem solchen Niveau liegen, daß dann, wenn der Vorsprung sich an den genannten oberen Punkten befindet, das untere Ende des Fingers (77) sich über den Kurbeln (52) befindet, während der untere Punkt der Rille (76) auf einem solchen Niveau liegt, daß dann, wenn sich der Vorsprung dort befindet, das genannte untere Ende des Fingers (77) in Eingriff mit der Aussparung (53) einer Kurbel (52) ist.

11. Schalter nach einem der Ansprüche 7 bis 10, dadurch gekennzeichnet, daß eine von zwei Reihen von Nasen (B(n, p)) weggelassen ist und die Steuermittel (45) zwei gleitbare und parallele Steuerstangen haben.

12. Schalter nach einem der Ansprüche 7 bis 11, dadurch gekennzeichnet, daß die leitenden Oberflächen der Kontakte der Stecker S-förmig ausgebildet sind, daß eine leitende Fläche durch den oberen Teil des S und die andere leitende Fläche durch den unteren Teil des S gebildet sind, und daß der mittlere Teil des S in den Körper des Steckers eingelassen ist.

FIG.1

FIG.2

FIG.3A  "0"  F(2,1)  4  4'  "0"  F'(2,2)  V2.1  V1.2  V1.1  P4  3'  3  H2.1  H2,2  H1.2

FIG.3B  "0"  F(2,1)  F'(2,2)  "1"  4'  V2.1  V1.1  V1.2  P1  3  3'  H2.1  H2.2  H1.2

FIG.3D  "1"  F(2,1)  4  "0"  F'(2,2)  V2.1  V1.2  P3  3'  3  H2.1  H1.2

FIG.3C  "1"  "1"  F(2,1)  4  F'(2,2)  V2.1  V1.2  P2  3'  3  H2.1  H1.2

0 038 256

0 038 256

FIG.4

"0"   "1"

0 038 256

FIG.5

FIG.6

4

FIG.7A

FIG.7B

FIG.7C

FIG.7D

0 038 256

VIIIc

75

70

76 77 71

68 69

52

51

48

**FIG.8b**

47

60 46 46 60

45 75

VIIIa VIIIa

67

B(n,f) 49 g(2,2)

50 48

**FIG.8c**

0 038 256

G'(2,2) G'(2,3)

B(n,f)

G(2,1) G(2,2) G(2,3)

VIIIb VIIIb

77a 77c

77b

**FIG.8a**

**FIG.10**

B(n,f) 61

62 63

60

65

57 66

63 58

61 55

62 56

60 51

64 54

66 55 52

FIG.9a

FIG.9b

FIG.9c